# DEMANDE DE BREVET EUROPEEN

(11) **EP 3 892 812 A1**
(43) Date de publication de la demande: **13.10.2021**
(21) Numéro de dépôt: 21167544.2
(22) Date de dépôt: 09.04.2021
(51) Int. Cl.: E06B 9/06, E06B 9/52, A01M 29/32

(54) **DISPOSITIF DE PROTECTION D'UNE OUVERTURE CONTRE L'INTRUSION DE VOLATILES**

(30) Priorité: 09.04.2020 FR 2003559
(71) Demandeur: Kupiec, Valérie, 69240 Thizy-les-Bourgs (FR)
(72) Inventeur: KUPIEC, Valérie, 69240 THIZY-LES-BOURGS (FR)
(74) Mandataire: Cabinet Laurent & Charras

(57) **Abrégé**

L'invention concerne un dispositif (1) de protection d'une ouverture (2) contre l'intrusion de volatiles.

Selon l'invention, le dispositif (1) comprend un filet (3) anti-volatiles comprenant une bande supérieure (4) assujettie à des moyens (5) de guidage et de coulissement destinés à être fixés à un bord supérieur (2a) de l'ouverture (2), le filet (3) comprenant également des moyens de lestage inférieurs (11) et des moyens de fixation latérale (12, 12a) aux bords latéraux (2b) de l'ouverture (2), dont au moins l'un des moyens de fixation (12a) est amovible.

## Description

### Domaine technique

La présente invention se rapporte au domaine technique de la protection anti-volatiles, et concerne plus particulièrement un dispositif de protection contre l'intrusion de volatiles à l'intérieur d'une zone à protéger, tel qu'un balcon, une porte, une ouverture de hangar dans l'industrie agro-alimentaire par exemple, etc.

D'une manière générale, la zone à protéger se situe en aval d'une ouverture à obturer avec ledit dispositif anti-volatiles.

### Art antérieur

Il est connu de l'art antérieur de protéger une ouverture contre l'intrusion de volatiles en fixant, sur tout le pourtour de l'ouverture, un filet anti-volatiles, dont la taille des mailles sont adaptées à la taille et à l'espèce des volatiles à retenir.

Cette solution donne entière satisfaction en termes de protection, par exemple pour un balcon ou une fenêtre, mais n'est pas adaptée pour protéger des ouvertures laissant passer ponctuellement et régulièrement des individus ou des véhicules.

Par ailleurs, lorsqu'il s'agit de protéger une fenêtre ou un balcon, cette solution n'est pas agréable pour l'occupant car elle créée une sensation d'enfermement avec un effet « cage » du fait de la présence du filet anti-volatiles.

### Exposé de l'invention

L'un des buts de l'invention et donc de remédier aux inconvénients de l'art antérieur en proposant un dispositif de protection d'une ouverture contre l'intrusion de volatiles qui puisse être adapté pour protéger des ouvertures devant laisser passer ponctuellement et régulièrement des individus ou des véhicules, tout en diminuant, voire supprimant le sentiment d'enfermement éventuellement ressenti par un occupant lorsqu'il s'agit de protéger une fenêtre ou un balcon.

À cet effet, il a été mis au point un dispositif de protection d'une ouverture contre l'intrusion de volatiles remarquable en ce qu'il comprend un filet anti-volatiles comprenant une bande supérieure assujettie à des moyens de guidage et de coulissement destinés à être fixés à un bord supérieur de l'ouverture. Le filet comprenant également des moyens de lestage inférieur et des moyens de fixation latérale aux deux bords latéraux de l'ouverture, dont au moins l'un des moyens de fixation est amovible.

De cette manière, le dispositif de protection selon l'invention permet de protéger une ouverture d'une zone contre l'intrusion de volatiles, tout en présentant un caractère amovible pour pouvoir, au besoin, positionner ou retirer ladite protection.

Par conséquent, l'invention permet de pouvoir protéger une ouverture, tel qu'une porte, à travers laquelle il y a du passage, car lorsqu'il nécessaire de laisser passer un individu ou un véhicule par exemple, le filet anti-volatiles est coulissé pour libérer l'ouverture. Par ailleurs, lorsqu'il s'agit de protéger un balcon ou une fenêtre par exemple, lorsque l'occupant est présent dans l'habitation, ce dernier peut ouvrir et rabattre latéralement le dispositif de protection pour éviter de ressentir un sentiment d'enfermement. Lorsque l'occupant le désir, ou lorsqu'il quitte son habitation, il remet en place le dispositif de protection pour éviter l'intrusion des volatiles en son absence.

Selon une forme de réalisation particulière, la bande supérieure du filet comprend une pluralité d'oeillets répartis sur la longueur de la bande, et les moyens de guidage et de coulissement comprennent un rail de guidage dans lequel coulissent une pluralité de chariots, chacun équipé d'un crochet engagé à l'intérieur d'un œillet de la bande à œillets.

Afin de réduire les nuisances sonores pouvant éventuellement être générés par le coulissement des chariots à l'intérieur du rail, les chariots comprennent chacun des galets, par exemple en nylon, montés avec capacité de roulement et coulissement à l'intérieur du rail de guidage.

La bande de lestage peut être réalisée de toute manière appropriée, par exemple la bande de lestage forme un fourreau contenant un matériau de lestage, tel que du sable par exemple, ou tout autre matériau approprié.

Les moyens de fixation latérale sont de tous types appropriés. Par exemple, une bande de renfort latérale peut-être vissée contre un bord latéral de l'ouverture. S'agissant des moyens de fixation latérale amovibles, ceux-ci peuvent être réalisés de toute manière appropriée, par exemple avec une bande de renfort latérale équipée d'oeillets lesquels viennent également s'engager à l'intérieur de crochets positionnés de manière fixe sur le bord latéral de l'ouverture.

Selon une forme de réalisation particulière, les moyens de fixation latérale amovibles comprennent une bande de renfort latérale comportant des éléments de fixation magnétiques répartis sur la longueur de la bande, destinés à coopérer avec des éléments de fixation magnétiques complémentaires fixés de façon complémentaire sur le bord latéral de l'ouverture.

De préférence, les éléments de fixation magnétiques et les éléments de fixation magnétiques complémentaires sont des aimants coopérants, soit avec d'autres aimants, soit avec des éléments métalliques. En d'autres termes, la bande de renfort latérale du filet peut comprendre des aimants destinés à coopérer avec des aimants ou des éléments métalliques, par exemple des pastilles métalliques complémentaires ou un rail métallique positionné de façon complémentaire sur le bord latéral de l'ouverture, ou inversement.

Avantageusement, les éléments de fixation magnétiques complémentaires sont intégrés dans une bande de renfort, par exemple en textile, fixée le long du bord latéral de l'ouverture à protéger afin de réduire les nuisances sonores lors de la fixation latérale.

Dans cette dernière configuration, les éléments de fixation magnétiques sont intégrés et fixés dans une doublure de la bande de renfort, afin d'éviter leur arrachement, et de renforcer la fiabilité et la durée de vie du dispositif.

Selon une forme de réalisation particulière, les moyens de guidage et de coulissement sont motorisés et peuvent être déclenchés, soit par un interrupteur, soit par télécommande, soit par un capteur de présence d'un individu de taille humaine ou d'un véhicule par exemple. De cette manière, lorsqu'il s'agit de protéger une ouverture avec du passage d'individus ou de véhicules, le filet de protection anti-volatiles peut s'ouvrir automatiquement avec le capteur de présence. Il en est de même lorsqu'il s'agit de protéger une fenêtre ou un balcon, cependant, l'interrupteur est préféré dans cette dernière application pour éviter les ouvertures fermeture intempestives.

### Description des figures

D'autres caractéristiques et avantages de l'invention ressortiront clairement de la description qui en est réalisée ci-après, à titre indicatif et nullement limitatif, en référence aux figures annexées, dans lesquelles :
[Fig. 1] la figure 1 est une représentation schématique, vue de face, du dispositif selon l'invention de protection d'une ouverture contre l'intrusion de volatiles, en partie ouvert.
[Fig. 2] la figure 2 illustre un exemple de chariot équipé de galets en nylon pour le roulement et le coulissement à l'intérieur du rail de guidage.

### Description détaillée de l'invention

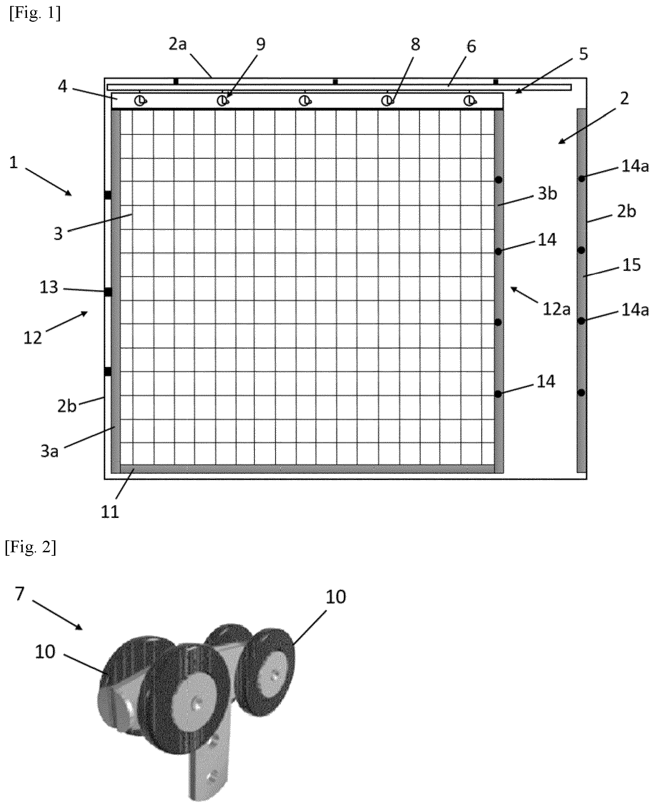

En référence à la figure 1, l'invention concerne un dispositif (1) de protection d'une ouverture (2) contre l'intrusion de volatiles.

L'ouverture (2) est de tout type approprié, et est par exemple une ouverture (2) de porte, fenêtre, balcon, ou hangar, etc.

Le dispositif (1) selon l'invention comprend un filet anti-volatiles (3), par exemple à mailles carrées de 19 mm x 19 mm à 50 mm x 50 mm, en fonction du type de volatiles à contrer.

Le filet (3) comprend une bande supérieure (4), par exemple en textile renforcé de 5 cm de largeur, assujettie à des moyens (5) de guidage et de coulissement fixés à un bord supérieur (2a) de l'ouverture (2).

Les moyens (5) de guidage et de coulissement peuvent-être de tous types appropriés, par exemple un câble en acier, éventuellement gainé avec du PVC passant dans des œillets répartis sur la longueur de la bande supérieure (4).

Selon une autre forme de réalisation, notamment celles illustré à la figure 1, les moyens (5) de guidage et de coulissement comprennent un rail (6) de guidage dans lequel coulissent une pluralité de chariots (7), chacun équipé d'un crochet (8) engagé à l'intérieur d'un œillet (9), notamment métallique, de la bande supérieure (6).

De cette manière, le filet anti-volatiles (3) est apte à coulisser le long du rail (6). Afin de réduire les nuisances sonores générées par coulissement des chariots (7) dans le rail (6), lesdits chariots (7) comprennent avantageusement des galets (10) en nylon montés capacité de coulissement et de roulement à l'intérieur du rail (6) de guidage. En fin de course, les extrémités du rail (6) sont obturées par des bouchons ou plaques soudées pour faire office de butée, comprenant éventuellement un tampon amortisseur toujours dans un but de réduction des nuisances sonores.

Pour faciliter la manipulation du filet anti-volatiles (3), et lui conférer une résistance au vent, celui-ci comprend également des moyens de lestage inférieurs (11) sous la forme par exemple d'une bande de lestage. Cette bande de lestage forme, par exemple, un fourreau contenant un matériau de lestage, tel que du sable ou tout autre matériau approprié. En pratique, le lestage inférieur présente un poids d'environ 300-500 g par mètre linéaire, de préférence 400 g/ml.

Le filet anti-volatiles (3) comprend, en outre, des moyens de fixation latérale (12, 12a) aux bords latéraux (2b) de l'ouverture (2). Notamment, au niveau de l'un des bords (2b), les moyens de fixation peuvent être fixes, par exemple de ce côté le filet anti-volatiles (3) comprend une bande de renfort latérale (3a) fixée par l'intermédiaire de vis (13) à un premier bord latéral (2b) de l'ouverture (2), tandis que le côté opposé du filet anti-volatiles (3) comprend une bande de renfort (3b) pourvus de moyens de fixation amovibles (12a) au bord latéral (2b) correspondant de l'ouverture (2).

De cette manière, le dispositif (1) selon l'invention crée une protection amovible contre l'intrusion de volatiles. Ainsi, lorsqu'il est nécessaire de libérer le passage de l'ouverture (2), ou de l'ouvrir pour supprimer le sentiment d'enfermement que peut ressentir un occupant, les moyens de fixation latérale amovibles (12a) sont détachés et le filet anti-volatiles (3) est coulissé en position ouverte.

Ces moyens de fixation latérale amovibles (12a) comprennent une bande de renfort latérale (3b), notamment par exemple en textile, comprenant de préférence des éléments de fixation magnétiques (14) répartis sur la longueur de la bande (3b). Ces éléments (14) sont destinés à coopérer avec des éléments de fixation magnétiques complémentaires (14a) fixés de façon complémentaire sur le bord latéral (2b) correspondant de l'ouverture (2) à protéger.

Ces éléments de fixation magnétiques (14), ainsi que les éléments de fixation magnétiques complémentaires (14a) sont par exemple des aimants coopérant, soit avec d'autres aimants, soit avec des éléments métalliques. Par exemple, la bande de renfort latérale (3b) du filet anti-volatiles (3) comprend des aimants intégrés et fixés dans une doublure de la bande de renfort (3b), tandis que les éléments de fixation magnétiques complémentaires (14a), par exemple des pastilles métalliques, sont intégrés dans une bande de renfort en textile (15) fixée le long du bord latéral (2b) de l'ouverture (2) à protéger. De cette manière, lorsque le filet (3) est coulissé en direction des éléments de fixation magnétiques complémentaires (14a), les aimants coopèrent avec les pastilles métalliques pour assurer la fixation, avec une mise en contact réalisée avec une nuisance sonore réduite. Les moyens de fixation magnétiques complémentaires (14a) peuvent être de tout type, par exemple un rail métallique fixé le long du bord latéral (2b) de l'ouverture (2) à protéger, ou bien peuvent être constitués par le bord latéral (2b), lui-même métallique.

Selon une forme de réalisation particulière, le dispositif (1) selon l'invention peut être motorisé. Plus précisément, les moyens (5) de guidage et de coulissement sont motorisés pour entraîner le coulissement du filet anti-volatiles (3). Le coulissement peut être déclenché par un capteur de présence, ou bien par un interrupteur ou télécommande.

Il ressort de ce qui précède que l'invention fournit bien un dispositif (1) de protection d'une ouverture (2) contre l'intrusion de volatiles, qui est adapté pour protéger les ouvertures devant laisser passer ponctuellement des individus ou des véhicules, tels que par exemple des portes, ouverture de hangar, etc., mais éventuellement des ouvertures du type balcon ou fenêtre sans créer de sentiment d'enfermement.

## Revendications

1. Dispositif (1) de protection d'une ouverture (2) contre l'intrusion de volatiles, **caractérisé en ce qu'**il comprend un filet (3) anti-volatiles comprenant une bande supérieure (4) assujettie à des moyens (5) de guidage et de coulissement destinés à être fixés à un bord supérieur (2a) de l'ouverture (2), le filet (3) comprenant également des moyens de lestage inférieurs (11) et des moyens de fixation latérale (12, 12a) aux bords latéraux (2b) de l'ouverture (2), dont au moins l'un des moyens de fixation (12a) est amovible.

2. Dispositif (1) selon la revendication 1, **caractérisé en ce que** la bande supérieure (4) du filet (3) comprend une pluralité d'oeillets (9) répartis sur la longueur de la bande (4), et les moyens (5) de guidage et de coulissement comprennent un rail (6) de guidage dans lequel coulissent une pluralité de chariots (7), chacun équipé d'un crochet (8) engagé à l'intérieur d'un œillet (9) de la bande supérieure (4).

3. Dispositif (1) selon la revendication 2, **caractérisé en ce que** les chariots (7) comprennent des galets (10) en nylon montés avec capacité de roulement et coulissement à l'intérieur du rail (6) de guidage.

4. Dispositif (1) selon la revendication 1, **caractérisé en ce que** les moyens de lestage inférieurs (11) comprennent une bande de lestage.

5. Dispositif (1) selon la revendication 4, **caractérisé en ce que** la bande de lestage forme un fourreau contenant un matériau de lestage, tel que du sable.

6. Dispositif (1) selon la revendication 1, **caractérisé en ce que** les moyens de fixation latérale amovibles (12a) comprennent une bande de renfort latérale (3b) comportant des éléments de fixation magnétiques (14) répartis sur la longueur de la bande (3b), destinés à coopérer avec des éléments de fixation magnétiques complémentaires (14a) fixés de façon complémentaire sur le bord latéral (2b) de l'ouverture (2) à protéger.

7. Dispositif (1) selon la revendication 6, **caractérisé en ce que** les éléments de fixation magnétiques (14) et les éléments de fixation magnétiques complémentaires (14a) sont des aimants coopérant avec des aimants ou avec des éléments métalliques.

8. Dispositif (1) selon la revendication 6, **caractérisé en ce que** les éléments de fixation magnétiques complémentaires (14a) sont intégrés dans une bande de renfort (15) fixée le long du bord latéral (2b) de l'ouverture (2) à protéger.

9. Dispositif (1) selon la revendication 6, **caractérisé en ce que** les éléments de fixation magnétiques (14) sont intégrés et fixés dans une doublure de la bande de renfort (3b).

10. Dispositif (1) selon la revendication 1, **caractérisé en ce que** les moyens (5) de guidage et de coulissement sont motorisés et déclenchés par un interrupteur, une télécommande ou par un capteur de présence d'un individu ou d'un véhicule.
